# EUROPÄISCHE PATENTSCHRIFT

(11) **EP 2 179 888 B1**
(45) Veröffentlichungstag und Bekanntmachung des Hinweises auf die Patenterteilung: **28.12.2011**
(21) Anmeldenummer: 09011890.2
(22) Anmeldetag: 17.09.2009
(51) Int. Cl.: B60N 2/56

(54) **Sitzpolster für einen klimatisierbaren Fahrzeugsitz**
Seating upholstery for an air conditionable vehicle seat
Rembourrage de siège pour un siège de véhicule pouvant être climatisé

(30) Priorität: 23.10.2008 DE 102008052844
(43) Veröffentlichungstag der Anmeldung: 28.04.2010
(73) Patentinhaber: Magna Seating (Germany) GmbH, 63877 Sailauf (DE)
(72) Erfinder: Bold, Thomas, 67705 Stelzenberg (DE); Ruschmann, Stephan, 65719 Hofheim (DE)
(74) Vertreter: Völger, Silke Beatrix

(56) Entgegenhaltungen:
- WO-A1-2008/058519
- DE-A1-102004 039 058
- DE-A1-102009 013 258
- DE-C1- 10 024 879
- DE-C1- 10 207 490
- DE-U1- 20 301 813
- US-A1- 2009 079 236

## Beschreibung

Die vorliegende Erfindung betrifft ein Sitzpolster für einen klimatisierbaren Fahrzeugsitz.

Um den Komfort in Fahrzeugen zu verbessern, werden häufig Fahrzeugsitze mit einer Belüftung, Kühlung, Heizung oder einer Kombination hiervon eingesetzt. Ein angenehmeres Sitzklima wird beispielsweise durch eine aktiv oder passiv belüftbare Sitzfläche erreicht.

Fahrzeugsitze mit einer Klimafunktion sind bereits in einer Vielzahl von Ausführungsformen bekannt. Bei Fahrzeugsitzen mit einer aktiven Klimatisierung sind dabei Lüfter vorgesehen, die Luft zur Erzielung der Klimafunktion durch die Sitzfläche bzw. die Lehnenfläche blasen oder ansaugen.

Aus der DE 100 24 879 C1 ist bereits ein aktiv belüftetes Sitzmodul für einen Fahrzeugsitz mit einem Polster bekannt. Das Polster besteht dabei im Wesentlichen aus einer luftundurchlässigen unteren Schaumstoffschicht, einer Luftführungsschicht aus einem Gewirk, einer luftdurchlässigen oberen Schaumstoffschicht, sowie einem die obere Schaumstoffschicht überdeckenden Polsterbezug. Bei diesem bekannten Sitzmodul ist allerdings nicht mit allen beschriebenen Ausführungsvarianten eine gezielte Luftführung errzielbar.

Aufgabe der vorliegenden Erfindung ist es daher, ein Sitzpolster für einen klimatisierbaren Fahrzeugsitz derart weiterzubilden, dass die Luftführung gezielt eingestellt werden kann und der Sitzkomfort eines mit dem Sitzpolster ausgestatten Fahrzeugsitzes verbessert wird.

Diese Aufgabe wird dabei durch die im Anspruch 1 angegebenen Merkmale gelöst. Durch die Ausbildung, dass die der Polsterschicht zugewandte Oberfläche der Luftführungsschicht ein Muster aus luftdurchlassigeii und luftundurchlässigen Bereichen aufweist, kann eine gezielte Luftführung ausgehend von der Luftführungsschicht zu der Oberfläche des Bezugs d.h. der Sitzfläche erreicht werden. Der Kraftfahrzeugsitz ist mit einem guten Silzkomfort ausgestattet, da die unter dem Bezug vorgesehen luftdurchlässige Polsterschicht vorzugsweise aus einem Weichschaum gebildet ist. Trotz der Verwendung des offenporigen, luftdurchlässigen Weichschaums, kann die Luftführung verbessert werden.

Weitere vorteilhafte Ausgestaltungen und Weiterbildungen des erfindungsgemäßen Verfahrens ergeben sich aus den Unteransprüchen.

Eine bevorzugte Ausführungsform des erfindungsgemäßen Sitzpolsters wird nachfolgend beispielshalber beschrieben, wobei veranschaulichend auf die beigefügten Zeichnungen Bezug genommen wird.

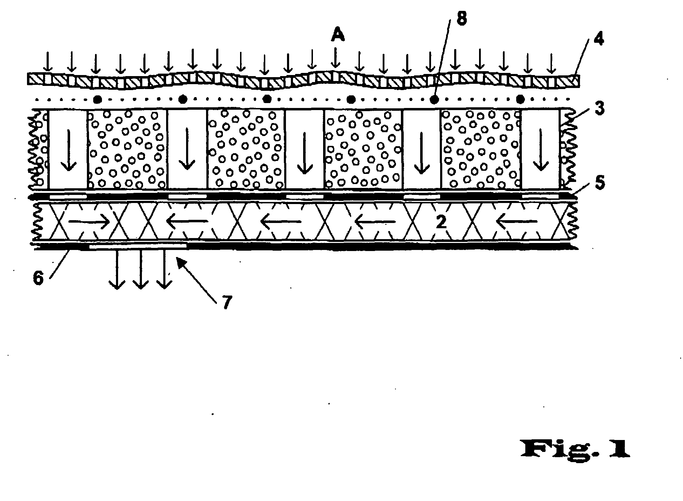

Es zeigt
Fig.1 ein Sitzpolster für einen klimatisierbaren Fahrzeugsitz im Querschnitt.

Ein herkömmlicher Fahrzeugsitz besteht aus einer ersten Tragstruktur mit einer daran angeordneten Rückenlehne, einem Sitzkissen mit einem Sitzpolster und einer zugeordneten zweiten Tragstruktur sowie einer Bodenabstützung. Zur Klimatisierung der Sitzfläche bzw. der Rückenlehne kann das nachstehend anhand der Figur 1 beschriebene klimatisierbare Sitzpolster 1 eingesetzt werden.

Figur 1 zeigt dabei das erfindungsgemäße Sitzpolster 1 in einer schematischen Darstellung im Querschnitt. Dabei weist das Sitzpolster 1 eine dem Benutzer zugewandte obere Seite A und eine untere Seite B auf. Ausgehend von der unteren Seite B umfasst das Sitzpolster eine Luftführungsschicht 2, eine auf der Luftführungsschicht 2 aufliegende luftdurchlässige Polsterschicht 3 sowie einen die Polsterschicht 3 überdeckenden luftdurchlässigen Bezug 4. Der luftdurchlässige Bezug 4, der die obere Seite A bildet, kann dabei aus einem Stoff bestehen. In einer anderen Ausgestaltung des Sitzpolsters 1 kann als Material für den Bezug auch Leder oder Kunstleder eingesetzt werden. Bei diesen Ausführungsformen wird die Luftdurchlässlgkeit durch eine Perforation des Materials erzielt. Hierbei kann die Perforation sowohl über die gesamte Sitzfläche verteilt, oder auch nur in gezielten Bereichen eingebracht sein. Der Bezug 4 als obere Schicht liegt auf der luftdurchlässigen Polsterschicht 3 auf. Die luftdurchlässige Polsterschicht 3 ist eine Schicht aus einem offenporigen Weichschaum. Alternativ hierzu kann auch ein geschlossenporiger Schaum eingesetzt werden Bei dieser Ausführungsvarianten wird die Luftdurchlässigkeit durch gezielt eingebrachte Luftführungskanäle erreicht.

Die Polsterschicht 3 liegt auf der dreidimensional ausgestalteten Luftführungsschicht 2 auf. Die Luftführungsschicht 2 hat die Aufgabe eine großflächige Verteilung des Luftstroms quer zum oben beschriebenen Schichtaufbau zu ermöglichen. Dies ist in der Figur 1 durch die Pfeile angedeutet. Die Luftführungsschicht 2 kann beispielsweise als Abstandsgewirke oder Gummihaarmatte ausgebildet sein. Die zur Polsterschicht 3 weisende Oberfläche der Luftführungsschicht 2 weist ein Muster aus luftdurchlässigen und luftundurchlässigen Bereichen auf. Vorzugsweise werden diese Bereiche durch eine auf der Luftführungsschicht 2 aufliegenden luftundurchlässigen Folie 5 gebildet, in die Lochungen eingebracht sind. Die zur unteren Seite B weisende Oberfläche der Luftführungsschicht 2 ist ebenfalls mittels einer luftundurchlässigen Schicht 6 abgedeckt.

Die Luftzufuhr bzw. -abfuhr zur Luftführungsschicht 2 erfolgt dabei über in die luftundurchlässige Schicht 6 eingebrachte Lufteinlassstellen 7, mittels eines unterhalb des Kraftfahrzeugsitzes angeordneten zeichnerisch nicht dargestellten Lüfters. Im Bereich der Sitzunterseite ist hierfür ein flexibler Schlauch angeordnet, der einerseits mit dem Lüfter in Verbindung steht und dessen anderer Endbereich an der Einlassstelle 7 der Dichtfolie 6 angeordnet ist.

Die obenstehend beschriebene Anordnung und Ausbildung der luftdurchlässigen Schichten 4,3, der Luftführungsschicht 2 sowie der Strömungsverbindung mit dem Lüfter gewährleisten eine Belüftung der Sitzfläche bzw. der Rückenlehne eines Kraftfahrzeugsitzes. Die Luft wird dabei von der oberen Seite A zu der unteren Seite B vom Lüfter angesaugt. Hierdurch sind eine Klimatisierung der Sitzftäche sowie eine Regulierung der Feuchtigkeit der Sitzfläche erzielbar. In einer alternativen Ausgestaltung kann die Luft auch von dem Lüfter in die Luftführungsschicht 2 eingeblasen werden und somit ausgehend von der unteren Seite B zur oberen Seite A strömen.

Um den Sitzkomfort weiter zu verbessern, kann des Weiteren eine Sitzheizung 8 vorgesehen werden. Hierbei kann entweder der Bezug 4 mit einer integrierten Sitzheizung 8 ausgestattet sein, oder die Heizdrähte können auf einem separaten Trägermaterial aufgebracht sein. Das mit den Heizelementen versehene Trägermaterial kann dann auf die der oberen Seite A abgewandte Oberfläche des Bezugs 4 aufkaschiert sein.

## Patentansprüche

1. Sitzpolster (1) für einen klimatisierbaren Fahrzeugsitz, umfassend eine dreidimensional ausgestaltete Luftführungsschicht (2), eine die Luftführungsschicht (2) überdeckende luftdurchlässige Polsterschicht (3), sowie ein die Polsterschicht (3) überdeckender luftdurchlässiger Bezug (4), **dadurch gekennzeichnet, dass** die der Polsterschicht (3) zugewandte Oberfläche der Luftführungsschicht (2) ein Muster aus luftdurchlässigen und luftundurchlässigen Bereichen aufweist.

2. Sitzpolster (1) für einen klimatisierbaren Fahrzeugsitz, nach Anspruch 1, wobei die Polsterschicht (3) aus einem luftdurchlässigen, porösen Schaum, vorzugsweise Weichschaum besteht.

3. Sitzpolster (1) für einen klimatisierbaren Fahrzeugsitz, nach Anspruch 1, wobei die Polsterschicht (3) aus einem geschlossenporigen Schaum besteht, in den Luftführungskanäle eingebracht sind.

4. Sitzpolster (1) für einen klimatisierbaren Fahrzeugsitz, nach einem der vorangehenden Ansprüche, wobei die Luftführungsschicht (2) auf der der Polsterschicht (3) abgewandten Oberfläche luftdicht ausgebildet ist und mindest eine Luftiührungsöffnung (7) zum Anschluss an ein Lüftermodul vorgesehen ist.

5. Sitzpolster (1) für einen klimatisierbaren Fahrzeugsitz, nach Anspruch 4, wobei die Luftführungsöffnung (7) durch ein die Luftführungsschicht (2) auf der der Polsterschicht (3) abgewandten Oberfläche aufweisendes Muster aus luftdurchlässigen und luftundurchlässigen Bereichen gebildet wird.

6. Sitzpolster (1) für einen klimatisierbaren Fahrzeugsitz, nach Anspruch 4 oder 5. wobei die luftdicht ausgebildete Oberfläche der Luftführungsschicht (2) eine Folie (6) ist.

7. Sitzpolster (1) für einen klimatisierbaren Fahrzeugsitz, nach einem oder mehreren der vorangehenden Ansprüche, wobei der Bezug (4) aus Leder oder Kunstleder besteht und das Leder bzw. Kunstieder zumindest bereichsweise perforiert ausgebildet ist.

8. Sitzpolster (1) für einen klimatisierbaren Fahrzeugsitz, nach einem oder mehreren vorangehenden Ansprüchen, wobei in den Bezug (4) eine Sitzheizung (8) integriert ist, oder ein flächiges vorzugsweise elektrisches Heizelement auf einem Trägermaterial angeordnet und das Trägermaterial auf die zur oberen Seite A abgewandten Oberfläche des Bezugs (4) aufkaschiert ist.

9. Sitzpolster (1) für einen klimatisierbaren Fahrzeugsitz, nach einem oder mehreren der vorangehenden Ansprüche, wobei die dreidimensionale Luftführungsschicht (2) ein Abstandsgewirke oder eine Gummihaarmatte ist.

10. Fahrzeugsitz, **dadurch gekennzeichnet, dass** er mit mindestens einem Sitzpolster (1) nach einem der voranstehenden Ansprüche versehen ist.

## Claims

1. Seat cushion (1) for an air conditionable vehicle seat, comprising a three-dimensionally configured air-guiding layer (2), an air-permeable cushion layer (3) covering the air-guiding layer (2), and an air-permeable cover (4) covering the cushion layer (3), **characterized in that that** surface of the air-guiding layer (2) which faces the cushion layer (3) has a pattern of air-permeable and air-impermeable regions.

2. Seat cushion (1) for an air conditionable vehicle seat, according to Claim 1,
wherein the cushion layer (3) consists of an air-permeable, porous foam, preferably flexible foam.

3. Seat cushion (1) for an air conditionable vehicle seat, according to Claim 1,
wherein the cushion layer (3) consists of a closed-pore foam, into which air-guiding channels are placed.

4. Seat cushion (1) for an air conditionable vehicle seat, according to one of the preceding claims, wherein the air-guiding layer (2) is of air-tight design on the surface facing away from the cushion layer (3), and at least one air-guiding opening (7) for connection to a foam module is provided.

5. Seat cushion (1) for an air conditionable vehicle seat, according to Claim 4,
wherein the air-guiding opening (7) is formed by a pattern consisting of air-permeable and air-impermeable regions and having the air-guiding layer (2) on the surface facing away from the cushion layer (3).

6. Seat cushion (1) for an air conditionable vehicle seat, according to Claim 4 or 5, wherein that surface of the air-guiding layer (2) which is of air-tight design is a film (6).

7. Seat cushion (1) for an air conditionable vehicle seat, according to one or more of the preceding claims, wherein the cover (4) consists of leather or synthetic leather, and the leather or synthetic leather is of perforated design at least in regions.

8. Seat cushion (1) for an air conditionable vehicle seat, according to one or more of the preceding claims, wherein a seat heater (8) is integrated in the cover (4), or a sheet-like, preferably electric heating element is arranged on a support material, and the support material is laminated onto that surface of the cover (4) which faces away from the upper side A.

9. Seat cushion (1) for an air conditionable vehicle seat, according to one or more of the preceding claims, wherein the three-dimensional air-guiding layer (2) is a spacer knitted fabric or a rubberized hair mat.

10. Vehicle seat, **characterized in, that** it is provided with at least one seat cushion (1) according to one of the preceding claims.

## Revendications

1. Rembourrage de siège (1) pour un siège de véhicule pouvant être climatisé, comprenant une couche de guidage d'air (2) configurée de façon tridimensionnelle, une couche de rembourrage (3) perméable à l'air recouvrant la couche de guidage d'air (2) ainsi qu'une housse (4) perméable à l'air recouvrant la couche de rembourrage (3), **caractérisé en ce que** la surface de la couche de guidage d'air (2) orientée vers la couche de rembourrage (3) présente un modèle composé de zones perméables à l'air et de zones imperméables à l'air.

2. Rembourrage de siège (1) pour un siège de véhicule pouvant être climatisé selon la revendication 1, la couche de rembourrage (3) se composant d'une mousse poreuse perméable à l'air, de préférence de la mousse molle.

3. Rembourrage de siège (1) pour un siège de véhicule pouvant être climatisé selon la revendication 1, la couche de rembourrage (3) se composant d'une mousse à pores fermés dans laquelle sont introduits des canaux de guidage d'air.

4. Rembourrage de siège (1) pour un siège de véhicule pouvant être climatisé selon l'une quelconque des revendications précédentes, la couche de guidage d'air (2) étant réalisée de façon étanche à l'air sur la surface opposée à la couche de rembourrage (3) et étant pourvue d'au moins une ouverture de guidage d'air (7) pour réaliser la jonction avec un module d'aération.

5. Rembourrage de siège (1) pour un siège de véhicule pouvant être climatisé selon la revendication 4, l'ouverture de guidage d'air (7) étant formée par la couche de guidage d'air (2) sur laquelle est formé un modèle composé de zones perméables à l'air et imperméables à l'air comportant une surface opposée à la couche de rembourrage (3).

6. Rembourrage de siège (1) pour un siège de véhicule pouvant être climatisé selon la revendication 4 ou 5, la surface de la couche de guidage d'air (2), réalisée de façon étanche à l'air, étant un film (6).

7. Rembourrage de siège (1) pour un siège de véhicule pouvant être climatisé selon l'une quelconque ou plusieurs des revendications précédentes, la housse (4) étant en cuir ou en skaï et le cuir et/ou le skaï étant au moins perforé dans certaines zones.

8. Rembourrage de siège (1) pour un siège de véhicule pouvant être climatisé selon l'une quelconque des revendications précédentes ou plusieurs d'entre elles, un chauffage de siège (8) étant intégré dans la housse (4) ou un élément chauffant électrique de préférence plat étant disposé sur un matériau de support et le matériau de support étant collé sur la surface de la housse (4) opposée au côté supérieur A.

9. Rembourrage de siège (1) pour un siège de véhicule pouvant être climatisé selon l'une quelconque des revendications précédentes ou plusieurs d'entre elles, la couche de guidage d'air (2) tridimensionnelle étant une natte en caoutchouc ou un tissu à grosses mailles.

10. Siège de véhicule, **caractérisé en ce qu'**il est pourvu d'au moins un rembourrage de siège (1) selon l'une quelconque des revendications précédentes.
